# EUROPÄISCHE PATENTANMELDUNG

(11) **EP 0 979 750 A2**
(43) Veröffentlichungstag der Anmeldung: **16.02.2000**
(21) Anmeldenummer: 99111911.6
(22) Anmeldetag: 21.06.1999
(51) Int. Cl.: B60N 2/06

(54) **Farhzeugsitz mit Verstellvorrichtung, die eine Spindel und eine zugeordnete Spindelmutter hat**

(30) Priorität: 12.08.1998 DE 19836424; 23.03.1999 DE 19912978
(71) Anmelder: C. Rob. Hammerstein GmbH & Co.KG, 42699 Solingen (DE)
(72) Erfinder: Frohnhaus, Ernst-Reiner, 42653 Solingen (DE); Becker, Burckhard, 42655 Solingen (DE)
(74) Vertreter: Bauer, Wulf, Dr.

(57) **Zusammenfassung**

Die Erfindung bezieht sich auf einen Fahrzeugsitz mit Verstellvorrichtung (24), die ein erstes Verstellelement (20) und ein zweites Verstellelement (22) aufweist, insbesondere Längsverstellvorrichtung eines Untergestells gegenüber einem Sitzteil, wobei die Verstellvorrichtung (24) eine Spindel (26) und eine zugeordnete Spindelmutter (30) hat, die die Spindel (26) umgreift und wobei die Spindel (26) drehfest an dem ersten Verstellelement (20) der Verstellvorrichtung (24) fixiert ist sowie die Spindelmutter (30) a) drehbar in dem zweiten, mit dem ersten Verstellelement (20) bewegungsverbundenen Verstellelement (22) gelagert ist und b) auf ihrem Außenmantel ein Schneckenrad ausbildet, welches mit einer Schnecke (32) in Eingriff ist, die mit einem Drehantrieb (36) verbindbar ist.

## Beschreibung

Die Erfindung bezieht sich auf einen Fahrzeugsitz mit Verstellvorrichtung, die ein erstes Verstellelement und ein zweites Verstellelement aufweist, insbesondere Längsverstellvorrichtung eines Untergestells gegenüber einem Sitzteil. Die Verstellvorrichtung hat eine Spindel und eine zugehörige Spindelmutter, die die Spindel umgreift. Die Spindel ist dem ersten Verstellelement der Verstellvorrichtung zugeordnet, die Spindelmutter ist mit dem zweiten Verstellelement bewegungsverbunden.

Derartige Verstellvorrichtungen für Fahrzeugsitze sind allgemein bekannt. Sie eignen sich insbesondere für einen Drehantrieb, der als Elektromotor ausgeführt ist. Nach dem Stand der Technik wird die Spindel drehangetrieben. Es sind mehrere Lösungen bekannt, das Axialspiel der Spindelmutter gegenüber der Spindel zu verringern bzw. aufzuheben.

Die Verstellvorrichtungen der eingangs genannten Art haben sich allgemein bewährt. Die Erfindung bemängelt an den vorbekannten Verstellvorrichtungen den Aufbau aus vielen Einzelteilen. Der Drehantrieb der Spindel durch einen Elektromotor hat zur Folge, dass ein Untersetzungsgetriebe mit hohem Untersetzungsfaktor dem Elektromotor nachgeschaltet werden muß. Die Lagerung der Spindel ist nicht einfach zu bewerkstelligen, dafür ist jedoch die Anordnung der Spindelmuttel im zweiten Verstellelement ohne Probleme einfach möglich.

Hiervon ausgehend hat sich die Erfindung die Aufgabe gestellt, die Verstellvorrichtung eines Fahrzeugsitzes der eingangs genannten Art dahingehend weiter zu bilden, dass die konstruktive Auslegung möglichst einfach ist, so dass die Verstellvorrichtung mit einfachen Mitteln preiswert erstellbar ist, einfach montiert und gewartet werden kann, ein aufwendiges Untersetzungsgetriebe eingespart wird und die Drehverbindung zwischen dem Drehantrieb und der eigentlichen Verstellvorrichtung möglichst einfach ausgebildet sein kann.

Diese Aufgabe wird gelöst durch einen Fahrzeugsitz mit Verstellvorrichtung, die ein erstes Verstellelement und ein zweites Verstellelement aufweist, insbesondere Längsverstellvorrichtung eines Untergestells gegenüber einem Sitzteil, wobei die Verstellvorrichtung eine Spindel und eine zugeordnete Spindelmutter hat, die die Spindel umgreift und wobei die Spindel drehfest an dem ersten Verstellelement der Verstellvorrichtung fixiert ist sowie die Spindelmutter a) drehbar in dem zweiten, mit dem ersten Verstellelement bewegungsverbundenen Verstellelement gelagert ist und b) auf ihrem Außenmantel ein Schneckenrad ausbildet, welches mit einer Schnecke in Eingriff ist, die mit einem Drehantrieb verbindbar ist.

Bei dem erfindungsgemäßen Fahrzeugsitz mit Verstellvorrichtung bildet die Kombination von auf der einen Seite Schnecke und Schneckenrad und auf der anderen Seite Spindelmutter und Spindel das komplette Übersetzungsgetriebe. Insbesondere durch die Schnecke und das Schneckenrad wird eine hohe Untersetzung erreicht. Dadurch kann der Drehantrieb unmittelbar durch einen Elektromotor, der typischerweise mit 3000 Umdrehungen pro Minute dreht, erfolgen. Auf diese Weise werden Maßnahmen für ein aufwendiges Untersetzungsgetriebe eingespart. Weiterhin kann die Welle, die den Drehantrieb mit dem Schneckenrad verbindet, sehr einfach ausgebildet sein, da sie mit einer relativ hohen Umdrehungszahl dreht und das zu übertragende Drehmoment daher klein ist, sie kann also einen geringen Querschnitt haben, sie kann beispielsweise aus Kunststoff ausgeführt sein. Vorzugsweise ist sie eine biegsame Welle.

Durch die feste Anordnung der Spindel im ersten Verstellelement wird eine sehr einfache konstruktive Auslegung erreicht. Diese führt zwar zu der Notwendigkeit, dass die Spindelmutter im zweiten Verstellelement drehbar gelagert sein muß, hierfür ergeben sich aber einfache Lösungen. Insbesondere läßt sich die ganze Anordnung relativ klein aufbauen.

Die Erfindung ermöglicht es, eine Verstellvorrichtung mit sehr einfachen Mitteln aufzubauen, die leichtgewichtig ist, eine hohe Funktionssicherheit aufweist, sich gut für eine Sperrung im Fall einer unfallbedingten Beschleunigung auslegen läßt und die relativ einfach zu montieren und zu warten ist.

In einer bevorzugten Ausführung der Erfindung ist die Spindelmutter in einem Halter angeordnet, der mit dem zweiten Verstellteil verbunden ist und einen Durchlaß für die Spindel aufweist. Die Verbindung dieses Halters mit dem zweiten Verstellteil erfolgt so, dass ein radialer Abstand von der Spindel vorliegt. Bei einer unfallbedingten Beschleunigung zwischen dem ersten und dem zweiten Verstellelement tritt aufgrund des Abstandes eine Kraft am Halter auf, die diesen schräg zu stellen trachtet.

Aufgrund des Durchlasses für die Spindel, der geeignet bemessen ist, kommt der Rand des Durchlasses des Halters in Kontakt mit den Gewindegängen der Spindel, wenn der Halter sich unfallbedingt verbiegt. Auf diese Weise wird eine Verhakung zwischen Halter und Spindel erzielt. Dadurch wird die durch unfallbedingte Kräfte bewirkte Verstellung zwischen den beiden Verstellelementen zumindest gebremst, im Normalfall so stark behindert, dass sie zum Erliegen kommt.

In einer bevorzugten Ausführung hat der Halter, auf den oben eingegangen wurde, eine Basis und zwei von dieser vorspringende Flansche. In den Flanschen befindet sich jeweils der Durchlaß für die freien Durchgang der Spindel. Insbesondere stehen die beiden Flansche parallel zueinander. Ein derartiger Halter ermöglicht eine einfache Aufnahme und Lagerung der Spindelmutter. Zugleich hat er die oben beschriebenen Vorteile eines Verhakens bei unfallbedingten Beschleunigungskräften, die zwischen dem ersten und dem zweiten Verstellelement angreifen.

Der Halter ist also so konstruiert, dass er sich bei unfallbedingten Belastungen deformiert und eine zusätzliche Verhakung bewirkt, unterhalb einer unfallbedingten Belastung aber im wesentlichen unverformt bleibt, sich also - wenn überhaupt - nur elastisch verformt. Insbesondere aufgrund der zusätzlichen Sicherung durch den Halter schafft man sich die Möglichkeit, die Spindelmutter und auch das Schneckenrad aus Kunststoff herzustellen.

Weitere Vorteile und Merkmale ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser zeigen:
- FIG. 1:: eine Draufsicht, teilweise schnittbildlich, auf eine Verstellvorrichtung für die Längsverstellung eines Fahrzeugsitzes gegenüber einer Bodengruppe eines Fahrzeuges,
- FIG. 2:: das aufgeschnittene Teil im linken Bereich der Figur 1 in etwas anderer Ausführung und vergrößert dargestellt,
- FIG. 3:: eine perspektivische Darstellung eines Halteteils für die Fixierung einer Spindel an einem ersten Verstellelement,
- FIG. 4:: eine Stirnansicht eines Halteelements, das mit einem ersten Verstellelement verbunden ist und eine Spindel trägt,
- FIG. 5:: ein perspektivisches Montagebild für die Befestigung eines Halteteils an einer Spindel und
- FIG. 6:: ein perspektivisches Montagebild einer Spindelmutter mit Lagerteilen und einem zugehörigen Halter.

Wie die Figuren zeigen, hat die Verstellvorrichtung ein erstes Verstellelement 20, das hier als Bodenschiene, die mit einer Bodengruppe des Fahrzeugs verbindbar ist, eines Schienenpaars ausgeführt ist. Das zweite Verstellelement 22 ist eine gegenüber dieser Bodenschiene verschiebbare und mit ihr geführte, beispielsweise in ihr geführte Sitzschiene. Die Verstellrichtung ist durch den Doppelpfeil 24 kenntlich gemacht.

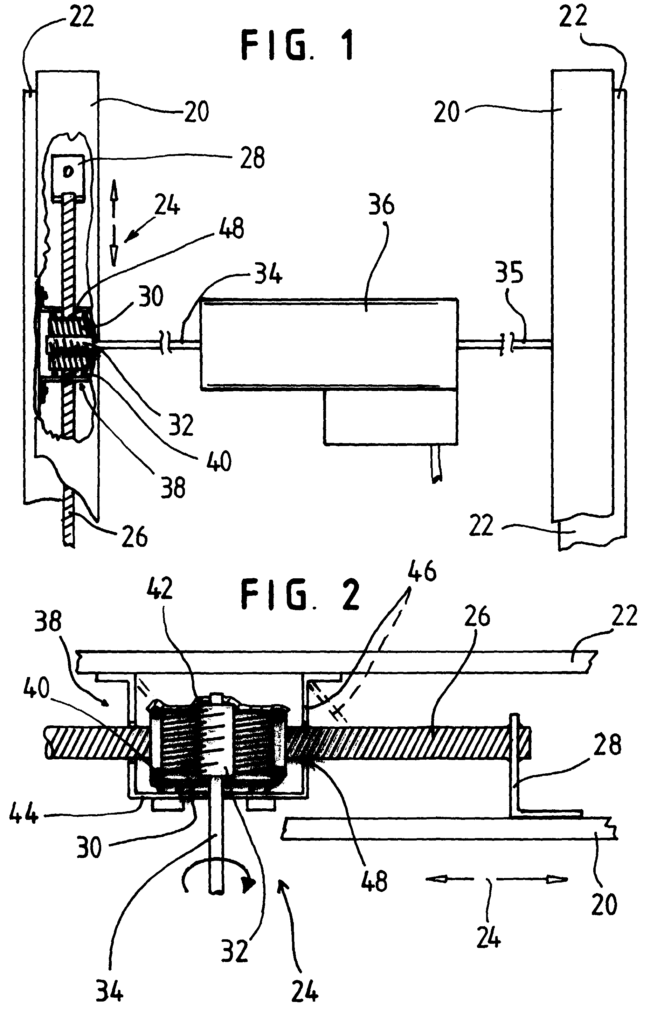

Das erste Verstellelement 20 ist mit einer Spindel 26 verbunden, die an ihrem in Figur 1 oberen Ende starr mittels eines Halteteils 28 in Form eines Winkels am ersten Verstellelement 20 angeordnet ist. Vorzugsweise ist auch das andere Spindelende so festgelegt, es kann aber auch in einer nachgiebigen Halterung, beispielsweise in einem Gummiblock, gehalten sein.

Die Spindel 26 wird von einer Spindelmutter 30 umgriffen. Sie ist aus Kunststoff hergestellt. Ihr Außenmantel bildet ein Schneckenrad. Dieses ist mit einer Schnecke 32 in Eingriff. Die Schnecke ist über eine Welle 34 mit einem Elektromotor, der hier den Drehantrieb bildet, drehverbunden. Diese Welle 34 kann im Querschnitt relativ klein ausgebildet sein, sie kann beispielsweise ein Kunststoffstab sein. Besonders geeignet sind flexible Wellen, beispielsweise Tachometerwellen, für den Einsatz als Welle 34.

Wie Figur 1 zeigt, hat der Elektromotor 36 auch an seinem anderen Ende einen Drehausgang, anders ausgedrückt läuft seine Ausgangswelle axial durch ihn hindurch. Auf der anderen Seite, gleichachsig mit der Welle 34, ist eine Welle 35 gleicher Bauart vorgesehen, die eine Verstellvorrichtung der rechten Sitzseite antreibt, die mit derjenigen der linken Sitzseite gleich, vorzugsweise baugleich ist.

Die Spindelmutter 30 ist in einem Halter 38 drehbar angeordnet, zwischen Spindelmutter 30 und Halter 38 sind zwei Kugellager 40 vorgesehen. Wie insbesondere Figur 2 zeigt, ist die Spindelmutter 30 selbst in einem Käfig 42 aus Kunststoff untergebracht, die Kugellager sind zwischen Käfig 42 und Spindelmutter 30 angeordnet. Der Käfig 42 ist über Schrauben mit dem Halter 38 verbunden. Andere Auslegungen sind möglich.

Der Halter 38 hat eine Basis 44, die im wesentlichen parallel zum ersten Verstellelement 20 verläuft, sowie zwei hierzu rechtwinklige Flansche 46. Letztere haben eine Abwinklung, an dieser sind sie jeweils mit dem ersten Verstellelement 20 verbunden.

In den Flanschen 46 sind Durchlässe 48 für den freien Durchgang der Spindel 26 vorgesehen. Sie haben einen lichten Durchmesser, der etwas größer als der Außendurchmesser der Spindel 26 ist. Diese Durchlässe machen sich im normalen Betrieb nicht bemerkbar. Tritt jedoch eine unfallbedingte Verstellkraft zwischen den beiden Verstellelementen 20, 22 auf, so reißt die Spindelmutter 30 den mit ihr zusammenhängenden Halter 38 mit, der Halter stellt sich schräg, wie dies gestrichelt in Figur 2 angedeutet ist, siehe Flansche 46. Dadurch kommen die Ränder des Durchlasses 48 in Kontakt mit den Schraubenwindungen der Spindel 26, es kommt zu einem mechanischen Eingriff. Dadurch wird eine weitere unfallbedingte Bewegung zwischen den beiden Verstellelementen 20, 22 allgemein so stark abgebremst, dass sie beendet ist.

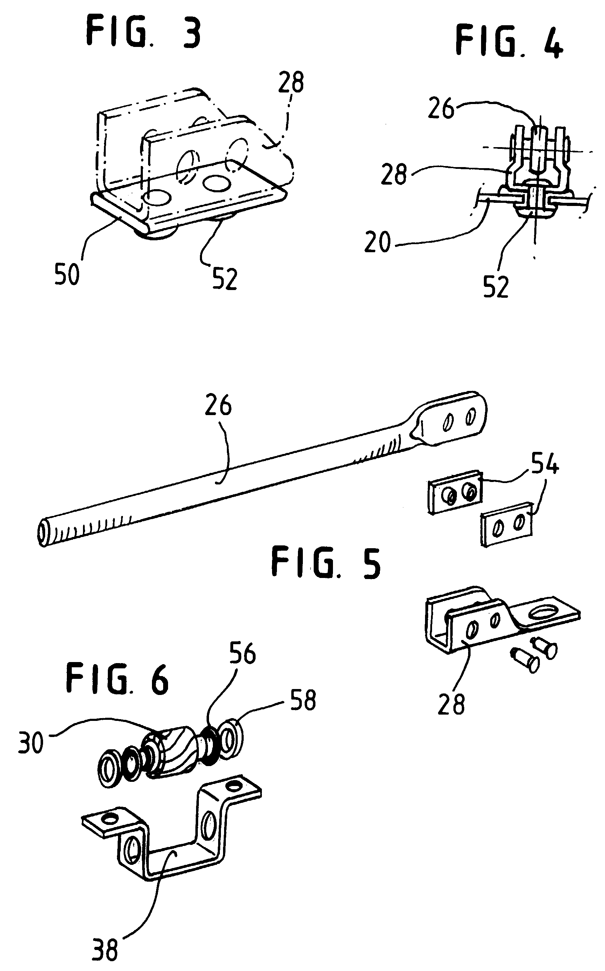

Die Ausführungsbeispiele nach den Figuren 3 und 6 ermöglichen eine Geräuschdämpfung beim praktischen Betrieb der Verstellvorrichtung. Bei diesen Ausführungsbeispielen ist ein Lösungsprinzip stets realisiert: Die unmittelbar angetriebenen und die am Antrieb unmittelbar beteiligten Teile sind nicht direkt mit den ihnen zugeordneten weiteren Teilen verbunden, sondern durch Zwischenlage von Absorptionskörpern, die eine Geräuschdämpfung und Schwingungsminderung bewirken. Bei den erwähnten Teilen handelt es sich beispielsweise um die Spindel 26, deren Halteteil 28 und um die Spindelmutter 30. Diese Teile werden immer so montiert und gehalten, dass sie nicht in direktem Kontakt mit den Teilen sind, an denen sie festliegen oder von denen sie gehalten werden. Es ist immer ein Dämpfungskörper aus einem Kunststoff oder Elastomeren zwischengeschaltet. Anders ausgedrückt sind diese Teile von den Teilen, an denen sie befestigt sind, durch Zwischenlage so isoliert, dass die Zwischenlage einen direkten Kontakt vermeidet. Bei einer elektrischen Isolation würde man genauso vorgehen.

Im Ausführungsbeispiel nach Figur 3 hat das gezeigte Halteteil 28, das den Winkel 28 nach dem Ausführungsbeispiel von Figur 1 und 2 ersetzt, eine Bodenplatte 50 aus einem elastomeren Material. Durch diese Bodenplatte 50 ist das Halteteil 28 geräuschmäßig isoliert vom ersten Verstellelement 20, auf dem die Bodenplatte 50 befestigt wird. Um auch einen Kontakt zwischen Halteteil 28 und erstem Verstellelement 20 über Befestigungsmittel, beispielsweise Schrauben, Nieten oder dergleichen, zu vermeiden, werden auch die Befestigungsmittel durch elastomere Muffen, Ringe oder Tüllen ummantelt, dies wird unter Bezugnahme auf die Figuren 4 und 5 noch näher erläutert.

In Figur 4 ist eine andere Ausbildung des Halteteils 28, das mit der Spindel 26 direkt verbunden ist, gezeigt. Hier ist ein elastomerer Dämpfungskörper 52 in Form einer eine periphere Kerbe aufweisenden Muffe vorgesehen, der das aus Metall gefertigte Halteteil 28 einschließlich des mit diesem in unmittelbarem Kontakt stehenden Niets 54 geräuschmäßig (und auch elektrisch) von dem ersten Verstellelement 20 trennt. Auf diese Weise ist eine Schallübertragung vom Halteteil 28 auf das erste Verstellelement 20 deutlich reduziert.

Figur 5 zeigt, wie die mechanische Verbindung zwischen dem einen Ende der Spindel 26 und dem Halteteil 28 so gestaltet werden kann, dass möglichst wenig Schall auf direktem Wege zum Halteteil 28 übertragen werden kann. Wiederum erfolgt die Verbindung nicht direkt zwischen Spindel 26 und Halteteil 28, sondern unter Zwischenlage von Absorptionskörpern 54 aus elastomerem Material, Kunststoff oder dergleichen. Das flachgedrückte Ende der Spindel 26 hat zwei Bohrungen. Die Absorptionskörper bestehen aus zwei gelochten Platten, die Lochung ist entsprechend den Bohrungen, weiterhin aus kurzen Rohrstücken, die vorzugsweise mit einem der Absorptionskörper 54 verbunden sind. Sie dienen dazu, die in der Figur gezeigten, stiftförmigen Befestigungsmittel vollständig von der Spindel 26 zu isolieren, indem sie die Löcher der Spindel 26 durchgreift und einen direkten Kontakt zwischen diesen Stiften und der Spindel 26 verhindern.

In der Ausführung nach Figur 6 ist die Lagerung der Spindelmutter 30 gezeigt. Die im wesentlichen zylindrische Spindelmutter hat an ihren beiden axialen Enden Lagerzapfen, die einstückig mit ihr verbunden sind. Auf diese Lagerzapfen werden zunächst Ringe 56 geschoben, beispielsweise Gummiringe, anschließend Kugellager 58. Die Lagerzapfen, die wie die gesamte Spindelmutter 30 für den Durchgang der Spindel 26 hohl sind oder auch ein Innengewinde aufweisen, sind radial geschlitzt und haben eine periphere Vertiefung. In diese klipsen die Kugellager 58, die Ringform haben, ein. Dabei wird auch der jeweils eine Ring 56 festgelegt. Der Ring gleicht Toleranzen aus, er wirkt aber auch geräuschdämpfend. Die Kugellager 58 werden nun ihrerseits an dem Halter 38 festgelegt, wie dies schon für das Ausführungsbeispiel nach den Figuren 1 und 2 beschrieben wurde.

Die Ausführung nach den Figuren 3 bis 6 zeigt jeweils Einzellösungen für eine akustische Abkopplung von dem Antrieb verbundenen Teilen von anderen Teilen. Bei der praktischen Ausführung der Erfindung werden die Lösungen kombiniert, es wird beispielsweise die Lösung nach Figur 3 oder 4 kombiniert mit der Lösung nach Figur 5 und der Lösung nach Figur 6.

Die Ausbildungen nach den Figuren 3 bis 6 sollen vermeiden, dass Körperschall von Teilen, die direkt mechanisch mit dem Elektromotor 36 oder mit von ihm direkt angetriebenen Teilen verbunden sind, auf andere Teile übergehen können. Durch die Dämpfungsmittel 50 bis 56 wird der Übergang von Körperschall von einem Teil auf das andere stark gedämpft. Als Material für die Dämpfungsmittel kommt ein Material mit ausreichender mechanischer Festigkeit in Frage, das in der akustischen Impedanz möglichst deutlich verschieden ist von den Teilen, die sich auf den beiden Seiten der Dämpfungsmittel befinden. Auf diese Weise wird ein Übergang der akustischen Wellen beispielsweise von der Spindel 26 auf das Halteteil 28 stark gestört, weil an den Grenzflächen zum Dämpfungsmittel die Schallwellen reflektiert werden und nur ganz unwesentlich eindringen.

## Patentansprüche

1. Fahrzeugsitz mit Verstellvorrichtung (24), die ein erstes Verstellelement (20) und ein zweites Verstellelement (22) aufweist, insbesondere Längsverstellvorrichtung eines Untergestells gegenüber einem Sitzteil, wobei die Verstellvorrichtung (24) eine Spindel (26) und eine zugeordnete Spindelmutter (30) hat, die die Spindel (26) umgreift und wobei die Spindel (26) drehfest an dem ersten Verstellelement (20) der Verstellvorrichtung (24) fixiert ist sowie die Spindelmutter (30) a) drehbar in dem zweiten, mit dem ersten Verstellelement (20) bewegungsverbundenen Verstellelement (22) gelagert ist und b) auf ihrem Außenmantel ein Schneckenrad ausbildet, welches mit einer Schnecke (32) in Eingriff ist, die mit einem Drehantrieb (36) verbindbar ist.

2. Fahrzeugsitz nach Anspruch 1, dadurch gekennzeichnet, dass die Spindelmutter (30) in einem Halter (38) angeordnet ist, der mit dem zweiten Verstellelement (20) verbunden ist und einen Durchlaß (48) für die Spindel (26) aufweist, und dass die Verbindung dieses Halters (38) mit dem zweiten Verstellelement (20) in Verbindungsbereichen erfolgt, die einen radialen Abstand von der Spindel (26) haben.

3. Fahrzeugsitz nach Anspruch 2, dadurch gekennzeichnet, dass der Halter (38) U-förmig ist, nämlich eine Basis (44) und zwei von dieser insbesondere parallel zueinander vorspringende Flansche (46) hat, in denen sich jeweils ein Durchlaß (48) für den freien Durchgang der Spindel (26) befindet.

4. Fahrzeugsitz nach Anspruch 3, dadurch gekennzeichnet, dass der Halter (38) an den freien Enden seiner Flansche (46) mit dem zweiten Verstellteil verbunden ist, insbesondere die freien Enden eine parallel zur Basis (44) verlaufende, der Befestigung dienende Abwinklung haben.

5. Fahrzeugsitz nach Anspruch 1, dadurch gekennzeichnet, dass der Halter (38) mechanisch so bemessen ist, dass er sich bei einer unfallbedingten Belastung der Verstellvorrichtung (24) verformt, insbesondere parallelogrammartig verformt, bei einer unterhalb einer unfallbedingten Belastung liegenden Belastung aber im wesentlichen unverformt bleibt, jedenfalls nur elastisch verformt.

6. Fahrzeugsitz nach Anspruch 1, dadurch gekennzeichnet, dass die Spindelmutter (30) aus Kunststoff hergestellt ist.

7. Fahrzeugsitz nach Anspruch 1, dadurch gekennzeichnet, dass die Schnecke (32) eine quer zur Achse der Spindel (26) verlaufende Drehachse hat und unmittelbar mit einem Elektromotor (36) verbindbar ist.

8. Fahrzeugsitz nach Anspruch 1, dadurch gekennzeichnet, dass die Spindel (26) aus Metall gefertigt ist.

9. Fahrzeugsitz nach Anspruch 1, dadurch gekennzeichnet, dass der Elektromotor (36) an zwei gegenüberliegenden Enden jeweils eine Ausgangswelle aufweist, dass die Ausgangswelle auf einer Seite mit der Verstellvorrichtung (24) des Fahrzeugsitzes für die linke Sitzseite und die Ausgangswelle auf der anderen Seite mit der Versteilvorrichtung (24) des Fahrzeugsitzes für die rechte Sitzseite verbunden ist.

10. Fahrzeugsitz nach Anspruch 1, dadurch gekennzeichnet, dass der Drehantrieb (36) mit einer Umdrehungszahl größer als 2000 Umdrehungen pro Minute, vorzugsweise größer als 3000 Umdrehungen pro Minute dreht.

11. Fahrzeugsitz nach Anspruch 1, dadurch gekennzeichnet, dass die Spindel (26) nur an einem Ende in einem Halteteil (28) gehalten ist und dass das andere Ende frei ist, vorzugsweise ist das andere Ende in einem Elastomerblock schwingungsdämpfend gelagert.

12. Fahrzeugsitz nach Anspruch 2, dadurch gekennzeichnet, dass zwischen dem Ende der Spindel (26) und dem Halteteil (28) ein Dämpfungskörper (52, 54), insbsondere ein Gummi- oder Kuststoffkörper angeordnet ist, so dass ein direkter Kontakt von Halteteil (28) und Spindel (26) ausgeschlossen ist, auch durch Befestigungsmittel, wie Schrauben, Nieten, nicht realisiert ist.

13. Fahrzeugsitz nach Anspruch 2, dadurch gekennzeichnet, dass der Halter (38) unter Zwischenlage eines Dämpfungsmittels (50, 52) mit dem zugehörigen ersten Verstellelement (20) verbunden ist, so dass ein direkter mechanischer Kontakt zwischen Halter (38) und dem ersten Verstellelement (20) nicht auftritt, auch nicht über Befestigungsmittel, wie Schrauben, Nieten.

14. Fahrzeugsitz nach Anspruch 2, dadurch gekennzeichnet, dass die Spindelmutter (30) axiale Lagerstutzen hat, auf die ein Kugellager (58) aufgeklipst werden kann und dass sich zwischen Kugellager (58) und der axial benachbarten Radialfläche der Spindelmutter (30) ein Ring (56) befindet, der vorzugsweise aus elastomerem Material gefertigt ist.
